# FASCICULE DE BREVET EUROPEEN

(11) **EP 1 737 767 B1**
(45) Date de publication et mention de la délivrance du brevet: **03.06.2009**
(21) Numéro de dépôt: 05739412.4
(22) Date de dépôt: 14.03.2005
(51) Int. Cl.: B65G 33/20

(54) **ALIMENTATION EN SOLIDE DE GRANULOMETRIE VARIABLE D'UN DISPOSITIF SOUS PRESSION**
VERSORGUNG EINER DRUCKBEAUFSCHLAGTEN VORRICHTUNG MIT FESTSTOFFEN VARIABLER KORNGRÖSSE
FEEDING OF A PRESSURISED DEVICE WITH VARIABLE GRAIN SIZING SOLID

(30) Priorité: 15.03.2004 FR 0450517
(43) Date de publication de la demande: 03.01.2007
(73) Titulaire: Commissariat à l'Energie Atomique, Bâtiment D "Le Ponant" 25 rue Leblanc 75015 Paris (FR); Institut Français du Pétrole, 92500 Rueil-Malmaison (FR)
(72) Inventeur: CHATAING, Thierry, F-38250 Lans-en-Vercors (FR); GRANGIER, Jean-Pierre, F-38500 Voiron (FR); ROSTAING, Maurice, F-38150 Ville-sous-Anjou (FR); KOCH, Thomas, DK-2860 Soborg (DK)
(74) Mandataire: Poulin, Gérard
(86) Numéro de dépôt international: PCT/FR2005/050163
(87) Numéro de publication internationale: WO 2005/092749

(56) Documents cités:
- DE-B- 1 277 144
- DE-C- 483 051
- GB-A- 920 138
- US-A- 5 524 796
- US-A- 5 823 123

## Description

### DOMAINE TECHNIQUE

L'invention se rapporte au transport de matière solide. Plus particulièrement, l'invention concerne le transport de la matière qui est sous forme granulaire ou inhomogène, c'est-à-dire de granulométrie variable et plus ou moins mélangée à un liquide, dont on connaît actuellement un exemple sous le terme de « biomasse ».

Notamment, l'invention se rapporte au transport d'un premier réservoir ou endroit de stockage vers un deuxième réservoir pressurisé.

### ÉTAT DE LA TECHNIQUE ANTÉRIEURE

Le terme « biomasse » regroupe sous l'un de ses usages tout matériau inhomogène d'origine biologique, qui peut être quasi-sec, comme les résidus de scierie ou la paille, ou imbibé d'eau comme les déchets ménagers. De granulométrie variable, son transport s'avère problématique. Or au vu de la valorisation de la biomasse qui est de plus en plus d'actualité, voire imposée, telle que par exemple par conversion thermochimique, le convoyage de cette matière solide se généralise et doit répondre à des critères exigeants, comme l'absence de pertes, et ce dans des conditions de coût optimales.

De nombreux dispositifs d'alimentation en solide existent, y compris concernant la biomasse. Les solutions retenues utilisent classiquement des vis sans fin (voir par example le document GB-A-920138). Mais ces systèmes ont été développés pour fonctionner à des pressions au voisinage de la pression atmosphérique.

Or, lors de processus de valorisation comme la conversion thermochimique, il faut, à partir de biomasse de nature et de granulométrie différentes stockée habituellement à la pression atmosphérique, pouvoir alimenter de manière continue un réacteur chimique fonctionnant sous pression.

Une première catégorie de dispositifs conçus pour fonctionner dans ces conditions utilise des chambres intermédiaires pressurisées, à l'azote par exemple, dénommée « Lock Hopper » ; un exemple d'un tel réacteur est donné par l'usine de démonstration de Värnamo (Sydkraft AB : « The Värnamo demonstration plant report », Berlings Skogs, Trelleborg 2001). L'inconvénient principal de tels dispositifs réside dans la consommation très importante de gaz de pressurisation avec des valeurs classiquement de l'ordre du dixième du débit massique véhiculé.

Une autre catégorie est basée sur un concept qui consiste à comprimer la biomasse par des pistons montés en cascade permettant d'assurer une bonne étanchéité entre l'élément de stockage (classiquement à basse pression) et l'élément réactionnel (à haute pression). Le maintien de la compression dans le bouchon tout en assurant l'alimentation en solide du procédé est cependant difficile à réaliser, et des instabilités apparaissent dans le procédé aval, du fait de l'alimentation cyclique en solide.

Une autre solution a été développée où une vis sans fin traditionnelle est utilisée pour comprimer de la matière qui vient s'appuyer sur un plateau tournant équipé de pics métalliques ayant comme fonction d'éroder le bouchon ainsi formé. Le bouchon désagrégé est collecté puis convoyé, par exemple par une vis sans fin, vers le procédé haute pression, comme dans les documents JP59-173394 ou JP60-81385. Il s'avère cependant que la fabrication d'un bouchon à l'aide d'une vis sans fin traditionnelle conduit à un taux de compression réduit, donc une étanchéité réduite assurée par le bouchon. Par ailleurs, le fonctionnement n'est pas constant dans le temps, car le passage continu de solide a tendance à polir la surface en contact avec le bouchon, ce qui entraîne une diminution de l'efficacité de la compression. Des modifications dans la géométrie de la vis sans fin, comme l'utilisation d'une vis sans fin à pas variable (DD-A-222091) ou conique (WO 93/15262), n'apportent pas de solution définitive à ces problèmes.

Il existe donc un besoin d'améliorer le transfert de biomasse d'un réservoir d'alimentation vers un réacteur sous pression. A cet effet, le convoyage de matière solide de granulométrie variable fait partie des éléments à parfaire.

### EXPOSÉ DE L'INVENTION

Sous l'un de ses aspects, l'invention concerne un dispositif de convoyage basé sur le transport par une vis sans fin. Dans le cadre de l'invention, pour éviter les problèmes inhérents au blocage du transfert occasionné par exemple par un bouchon de matière comprimé, le dispositif selon l'invention présente une contrevis sur le manchon entourant la vis sans fin : le transport peut donc être assuré de façon hermétique, et la contrevis permet d'éviter les accumulations de matière sur les parois du manchon tout en guidant la matière compressée.

De préférence, la contrevis présente un pas très supérieur au pas de la vis de convoyage, et plusieurs contrevis imbriquées sont présentes. La vis et la/les contrevis peuvent avoir un pas constant ou des pas variables, éventuellement indépendamment les unes des autres.

Il est préférable que l'angle entre les spires de la vis et les spires des contrevis soit égal à 90° pour obtenir une efficacité maximale, notamment dans le cas où une compression du solide transporté est assurée en plus du transport proprement dit : la compression est ainsi améliorée et la consommation d'énergie optimisée.

Sous un autre aspect, l'invention concerne un système de transport dans lequel le dispositif présenté précédemment est utilisé entre des moyens d'introduction qui peuvent être reliés à un premier réservoir, ou alimentation, et des moyens de décharge, qui peuvent être reliés à un deuxième réservoir, par exemple un réacteur, qui peut notamment être sous pression, c'est-à-dire à une pression supérieure au réservoir d'alimentation, par exemple par une différence de température très importante.

De façon préférée, le dispositif de convoyage présent dans le système assure une compression de la matière en plus de son transport, par exemple grâce à la présence de moyens d'obturation temporaire.

Avantageusement, la matière comprimée, ou bouchon, localisée à une extrémité de la vis sans fin du dispositif de convoyage, est ensuite érodée pour être de nouveau transportée. A cet effet, le système selon l'invention peut présenter une deuxième vis sans fin, voire un deuxième dispositif similaire au premier, localisés de préférence à un angle droit de l'extrémité du premier dispositif de convoyage où se trouve le bouchon, et dont l'une des spires au moins peut être manufacturée de manière à éroder le bouchon pour permettre le transport de la matière ainsi prélevée par la seconde vis sans fin. A cet effet, les moyens pour obturer le premier dispositif et permettant de comprimer la matière transportée peuvent être constitués de la deuxième vis sans fin, sur laquelle vient s'appuyer le bouchon.

Selon l'une des possibilités, le processus ainsi généré peut se répéter, et le système peut comporter un nombre variable de vis sans fin et dispositifs pour convoyer la matière solide. Il est souhaitable que le convoyage de matière s'effectue entièrement selon un plan horizontal (à l'exception de l'alimentation). Toutes les vis sans fin, ou seulement certaines, voire peut-être uniquement la première, peuvent assurer une compression parallèle au convoyage. De façon préférée, les vis permettant une compression font partie de dispositifs tels que décrits précédemment, c'est-à-dire sont localisées dans des manchons présentant des contrevis. La présence de contrevis, tel que précisé plus haut, limite les pertes de matière au cours du transport, permet d'assurer une compression homogène sans blocage du système, et donc permet de générer un bouchon dont le taux de compression et les qualités d'étanchéité sont prédéterminés.

Avantageusement, l'assemblage entre les dispositifs de convoyage successifs est étanche. Le système peut même être étanche entre l'entrée par les moyens d'alimentation jusqu'au réservoir de décharge.

Sous un autre aspect, l'invention se rapporte à un procédé de convoyage d'un premier réservoir jusqu'à un deuxième, le deuxième pouvant être sous pression, par l'intermédiaire de vis sans fin associées à des contrevis, de préférence avec compression de la matière transportée. La compression s'accompagne de la formation d'un bouchon qui assure l'étanchéité entre le dispositif créant le bouchon et le dispositif localisé en aval.

L'utilisation de vis sans fin successives permet une mise sous pression progressive, et donc une utilisation réduite de gaz de pressurisation, voire l'utilisation de plusieurs gaz différents au cours du transport.

### BRÈVE DESCRIPTION DES DESSINS

Les figures des dessins annexés permettront de mieux comprendre l'invention, mais ne sont données qu'à titre indicatif et ne sont nullement restrictives.

La figure 1 représente un dispositif selon l'un des modes préférés de réalisation de l'invention.

Les figures 2A et 2B donnent une représentation schématique, de face et de dessus, d'un système de transport de biomasse, dans ce cadre par l'intermédiaire de deux dispositifs conformes à un des modes de réalisation de l'invention.

### EXPOSÉ DÉTAILLÉ DE MODES DE RÉALISATION PARTICULIERS

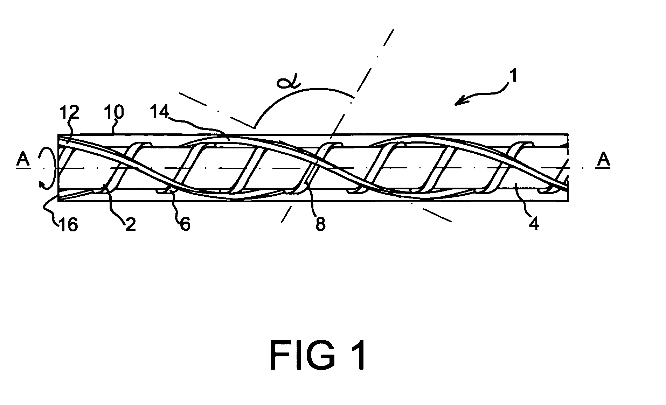

La figure 1 représente un dispositif 1 de convoyage. Comme dans l'art antérieur, ce dispositif comporte une vis sans fin 2, comprenant un arbre 4 rotatif autour d'un axe AA et muni d'un enroulement hélicoïdal 6 en saillie. L'enroulement hélicoïdal 6 présente, dans un premier sens d'enroulement, des spires 8 qui peuvent être séparées selon un pas variable, mais de préférence constant. La vis sans fin 2 est localisée dans un manchon 10 dans lequel elle peut tourner librement.

Par contre et selon l'invention, le manchon 10 présente sur sa surface intérieure au moins un enroulement hélicoïdal 12 en saillie, appelé également contrevis ou vis de cage. Dans le cadre de la figure 1, deux contrevis 12 sont présentes, chacune étant composée de spires 14 enroulées dans un second sens d'enroulement opposé au premier sens d'enroulement de la vis sans fin 2. Le manchon 10 et l'enroulement 12 sont dimensionnés de sorte que la vis 2 peut tourner librement ; le manchon 10 lui-même peut éventuellement être soumis à une rotation dans le même sens et à une vitesse différente de la vis 2, ou dans le sens inverse. Les spires 14 des vis de cage 12 sont espacées d'un pas variable ou constant, de préférence chacune des contrevis 12 ayant une géométrie similaire pour un même dispositif 1. Il est souhaitable que les contrevis 12 aient un pas beaucoup plus large que le pas de la vis sans fin 2, de préférence entre 5 et 20 fois, par exemple 10 fois plus large.

Les dimensions de l'arbre 4, du manchon 10, des saillies 8, 14, des pas de la vis 2 et de la contrevis 12, dépendent du matériau à transporter et du débit souhaité. Il est souhaitable que les spires 14 soient de dimensions sensiblement identiques à celles des spires 8 de la vis sans fin 2 de convoyage, c'est-à-dire que la taille de la section des spires 8, 14 dans un plan perpendiculaire à leur direction soit similaire pour la contrevis 12 et la vis sans fin de convoyage 2. Les matériaux constituant le dispositif 1 peuvent être par exemple de l'acier inoxydable, notamment dans le cas où le dispositif fonctionne à température basse ou peu élevée ; dans le cas où la matière est transportée par exemple à plus de 1000°C, le nickel ou ses alliages sont envisagés. Il est possible également que la vis soit constituée des deux matériaux successivement, par exemple avec l'alliage résistant à la haute température, du type Haynes^{®}HR230, du côté localisé à l'extrémité de décharge.

Exemple 1 : un des modes de réalisation pour transporter du charbon de bois concerne un dispositif 1 en acier inoxydable 304L ; une vis 6 dont l'arbre 4 a un diamètre de 22 mm tourne dans un manchon 10 de diamètre intérieur 40 mm. Les spires 8, 14 des enroulements hélicoïdaux sont de section carrée de côté 4 mm, avec un pas de 30 mm pour la vis 6 et 270 mm pour la contrevis 12.

Exemple 2 : un des modes de réalisation pour transporter du charbon de bois concerne un dispositif 1 en acier inoxydable 304L ; une vis 6 dont l'arbre 4 a un diamètre de 90 mm tourne dans un manchon 10 de diamètre intérieur 160 mm. Les spires 8, 14 des enroulements hélicoïdaux sont de section carrée de côté 10 mm, avec un pas de 130 mm pour la vis 6 et 900 mm pour la contrevis 12.

De façon préférée, et tel que représenté sur la figure 1, pour obtenir une efficacité maximale, la contrevis 12 est orientée perpendiculairement à la vis sans fin 2, c'est-à-dire que l'angle α entre la direction des spires 8 de la vis sans fin 2 et la direction des spires 14 de la contrevis 12 est constant le long du dispositif et égal à 90°. Ceci permet une meilleure compression et une moindre consommation d'énergie, mais selon les circonstances, d'autres angles sont envisageables.

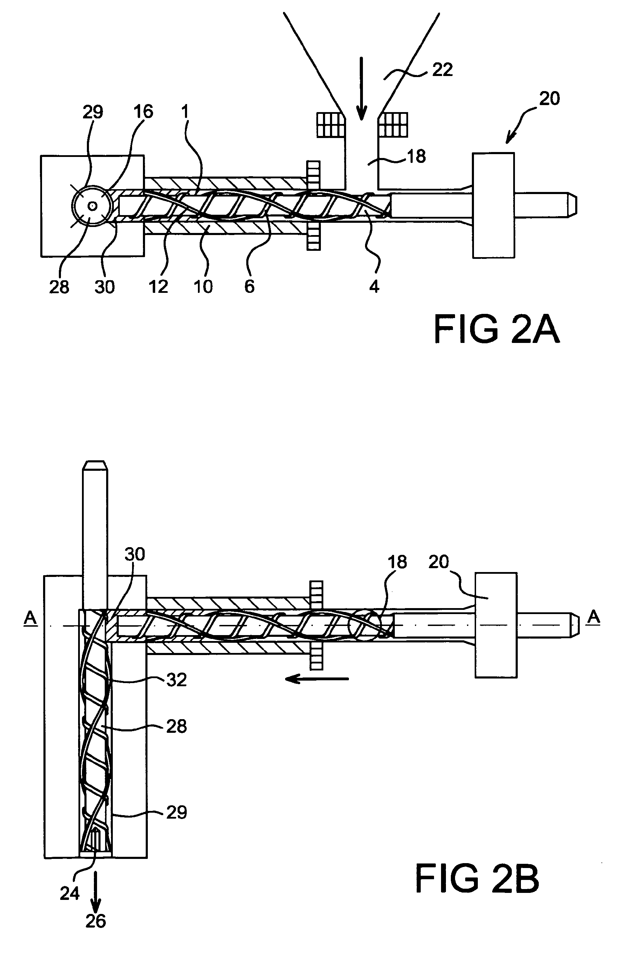

Un tel dispositif permet de véhiculer de la matière solide de granulométrie variable, et notamment de la biomasse, sans blocage, sur de grandes distances. Par ailleurs, le dispositif 1 selon l'invention permet de comprimer le solide transporté, et de créer un bouchon : si l'extrémité « finale » 16 de la vis sans fin 2, c'est-à-dire l'extrémité vers laquelle est dirigée la matière convoyée, est totalement ou partiellement obturée, il s'y produit une accumulation de matière. Contrairement aux dispositifs existants où ce bouchon peut obstruer le manchon 10, le bouchon créé par le dispositif selon l'invention sera localisé à l'extrémité 16 de la vis sans fin 2 grâce au mouvement généré par la contrevis 12. La vis de cage 12 permet par ailleurs d'augmenter et d'homogénéiser le taux de compression de la matière. Il est possible, afin de favoriser la création d'un bloc de matière comprimé homogène, de laisser une partie de l'arbre 4 sans saillies 6 autour de l'extrémité de décharge 16, c'est-à-dire de faire commencer l'enroulement 12 à une certaine distance non nulle, mais sensiblement limitée, de l'extrémité 16 (illustré en figure 2).

Dans le cadre du transport de matière fortement imprégnée de liquide, par exemple les déchets ménagers, il est souhaitable de prévoir des moyens d'extraction du liquide libéré dans le cadre de la compression, par exemple un orifice localisé à proximité de l'extrémité de décharge 16.

Le dispositif 1 peut faire partie d'un système, tel que celui de la figure 2 dans lequel il est connecté à des moyens d'introduction 18 de matière solide. Ces moyens d'introduction 18 peuvent être localisés à l'extrémité de la vis opposée à l'extrémité de décharge 16, ou le long de l'enroulement 6. De préférence, l'arbre 4 de la vis sans fin 2 du dispositif 1 est prolongé au-delà des moyens d'introduction 18 afin de pouvoir être connecté à des moyens 20 de mise en rotation de la vis 2.

Les moyens d'introduction 18 sont couplés à un réservoir d'alimentation 22, qui fonctionne de préférence entre la pression atmosphérique et plusieurs atmosphères. De même, la température du réservoir d'alimentation peut varier, mais reste de préférence entre la température ambiante et la température de thermolyse du produit concerné (soit entre 20°C et 200°C).

Par ailleurs, l'extrémité de décharge 16 du dispositif 1 est reliée à des moyens de décharge 24, qui sont de préférence connectés à un réservoir de décharge 26. La connexion peut être directe, c'est-à-dire que la matière convoyée par le dispositif 1 est directement dirigée dans un réservoir de stockage 26. Cependant, dans le cas où de la biomasse est comprimée par le dispositif 1, ou si le réservoir de décharge 26 est à une pression supérieure à la pression régnant au niveau des moyens d'alimentation 18, voire si la différence de température entre les deux réservoirs 22, 26 est extrême, il est préférable de placer au moins un deuxième dispositif de convoyage entre l'extrémité 16 de décharge du premier dispositif 1 et les moyens de décharge 24 du système.

Avantageusement, le deuxième dispositif de convoyage comprend une deuxième vis sans fin 28 ; la deuxième vis peut être également localisée dans un manchon 29 dans lequel elle tourne librement. De façon préférée, cette deuxième vis sans fin 28 est conformée de façon à elle-même obturer partiellement l'extrémité 16 de décharge du premier dispositif 10 : un bouchon 30 se crée alors directement par le transport de la matière et sa mise en contact avec la vis 28. De préférence, la deuxième vis sans fin est capable de « grignoter », ou éroder, le bouchon 30 créé à l'extrémité du dispositif 1. Ceci permet de doser l'alimentation en biomasse du deuxième dispositif de convoyage 28, 29.

Par ailleurs, la présence d'un bouchon 30 de matière comprimée avec un taux de compression suffisant permet une étanchéité entre les deux extrémités du bouchon 30, c'est-à-dire celle qui est dirigée du côté de l'arrivée de matière et celle 16 qui est érodée par le deuxième dispositif de convoyage 28 : le bouchon 30 peut être suffisamment compact pour éviter des transferts de pression entre le premier dispositif 1 et le deuxième dispositif 28, 29 si la différence de pression régnant entre les deux n'est pas trop élevée. A cette fin, il est souhaitable que la vis sans fin du deuxième dispositif 28 soit placée selon un angle de 90° avec l'axe AA du premier dispositif, tel que représenté sur les figures 2 ; il est également préconisé que les deux vis 2, 28 soient localisées dans le même plan horizontal.

On note que suivant la nature et la granulométrie du matériau transporté, la vitesse de rotation de la deuxième vis 28, le pas de ses spires, la vitesse de rotation du premier dispositif 1 ainsi que les caractéristiques relatives à son enroulement 6, il est possible de régler le taux de compression du bouchon 30, et de l'adapter aux conditions d'utilisation éventuelle dans un réacteur thermochimique. Par ailleurs, il est possible d'imposer un différentiel de pression entre les deux dispositifs 28, 29 et 1, et donc d'orienter le matériau solide vers un réservoir de décharge 26 maintenu à une pression supérieure au réservoir d'alimentation 22. Il est à noter que la pressurisation de la matière transportée ne nécessite pas, grâce au procédé décrit ci-dessus, autant de gaz de pressurisation que les systèmes existants, l'étanchéité entre le deuxième dispositif 28, 29 et le premier réservoir 22 (par l'intermédiaire des moyens d'introduction 18) pouvant être maintenue en continu par le bouchon 30.

Au cours d'essais, la perte de charge à travers le bouchon, c'est-à-dire le différentiel de pression entre le manchon 10 et par exemple le manchon 29 d'un dispositif situé de l'autre côté, a été mesurée avec un débit de gaz (ici l'azote) injecté constant pour un bouchon (dans ce cas de charbon de bois), en fonction du couple résistant de la vis de compression (le bouchon avait donc différents taux de compression). Les résultats sont satisfaisants, notamment en vue d'une alimentation en biomasse d'un lit fluidisé pressurisé. Par ailleurs, il a été noté que pour une perte de charge de 0,2 bar, la perte en gaz de pressurisation est minime, avec un débit de gaz de pressurisation de l'ordre de 1 % du débit de matière traitée et transportée par le dispositif 1, à comparer avec les 10 % des systèmes actuellement utilisés.

Des moyens de mise en rotation de la deuxième vis 28 peuvent être prévus. Il est possible d'équiper le deuxième dispositif 28, 29 également d'une contrevis 32, c'est-à-dire d'utiliser comme deuxième dispositif de convoyage un dispositif similaire au premier, mais dont les matériaux constituant les vis sont différents. Le tableau I présente des caractéristiques pour le transport de charbon de bois.

**Tableau 1 : Exemples de caractéristiques techniques pour un dispositif conforme à la figure 2.**

| Pièce | Matériau | Débit | 1 kg/h | 100 kg/h |
|---|---|---|---|---|
| Arbre 4 | Acier inox 304L | Diamètre | 22 mm | 90 mm |
| Spires 6 | Acier inox 304L | Pas | 30 mm | 130 mm |
| | | Section | 4x4 mm | 10x10 mm |
| Manchon 10 | Acier inox 304L | Dia.intérieur | 40 mm | 160 mm |
| Contrevis 12 | Acier inox 304L | Pas | 270 mm | 900 mm |
| | | Section | 4X4 mm | 10x10 mm |
| Réservoir 18 | Acier inox 304L | | | |
| Arbre 28 | | Diamètre | 22 mm | 95 mm |
| | Acier Inox 304L | Longueur 1 | 1135 mm | 2000 mm |
| | Haynes^{®} HR230 | Longueur 2 | 1035 mm | 1000 mm |
| Manchon 29 | Acier inox 304L | Dia.intérieur | 40 mm | 160 mm |
| | | Epaisseur | 4 mm | 15 mm |
| Contrevis 32 | | Section | 4x4 mm | 10x10 mm |
| | Acier inox 304L | Longueur 1 | 1135 mm | 2000 mm |
| | Haynes^{®} HR230 | Longueur 2 | 1035 mm | 1000 mm |
| Décharge 26 | Haynes^{®} HR230 | | | |

Dans ce cas où une vis de cage est présente, il est possible d'envisager une seconde compression de la matière transportée : le deuxième dispositif 28, 29 érode le bouchon 30 puis, de façon similaire à la précédente description, le transporte pour former un deuxième bouchon à son extrémité de décharge (non représenté). On peut alors prévoir une troisième vis sans fin à cette extrémité de décharge pour éroder le deuxième bouchon et transporter la matière résultante. Ce principe peut naturellement être répété, avec un nombre N ≥ 3 de vis sans fin, et avec la formation de n ≤ N bouchons, si possible tous localisés dans le même plan horizontal. Ceci permet une compression progressive, et peut être utile pour limiter la consommation en gaz de pressurisation en cas de grande différence de pression entre le réservoir d'alimentation 22 et le réservoir de décharge 26. Par ailleurs, il peut être envisagé d'utiliser des gaz de pressurisation différents dans chacun des dispositifs de convoyage et compression. Il est également possible de neutraliser la matière à une étape intermédiaire, par exemple par injection d'un gaz neutre, ou par un changement, notamment une baisse, de la température régnant dans le dispositif pour l'une des étapes.

Le procédé et le système selon l'invention pour alimenter un réservoir pressurisé en biomasse stockée dans un réservoir basse pression permettent donc une consommation très réduite du gaz de pressurisation et son absence dans certains cas (pression de fonctionnement inférieure à quelques bars). Le débit de fuite entre le réservoir de stockage de biomasse et le réacteur chimique peut rester à une valeur inférieure au centième du débit solide véhiculé (en débit massique).

Par ailleurs, l'alimentation du réservoir de décharge en biomasse peut être continue. Il est possible de doser le débit d'alimentation pour toutes les conditions de fonctionnement, grâce à un asservissement du système de compression, pour assurer l'étanchéité du système. Il est possible de transporter tout solide granulaire, autre que la biomasse, y compris dans le cas de géométrie et taille des granules variables. A cette fin, on peut adapter les vis sans fin utilisées dans le système décrit ci-dessus, par exemple en modifiant leur pas et la taille de leur section. Par ailleurs, le système peut fonctionner à une gamme de température étendue et peut donc être utilisé par exemple avec un refroidissement pour de la matière se dégradant avec la température, ou pour un réacteur chimique fonctionnant à très haute température par rapport à l'alimentation (par exemple de l'ordre de 1000°C).

## Revendications

1. Système de convoyage de solide d'un premier réservoir (22) vers un deuxième réservoir (26) comprenant :
- des moyens d'introduction (18) qui peuvent être connectés à un premier réservoir (22),
- un premier dispositif de convoyage (1) connecté aux moyens d'introduction (18) comprenant une vis sans fin (2) constituée d'un arbre (4) muni d'un enroulement hélicoïdal (6) en saillie dans un premier sens d'enroulement, et un manchon (10) dans lequel la vis (2) est localisée et peut tourner, le manchon (10) comprenant au moins une contrevis (12) constituée d'un enroulement hélicoïdal en saillie sur la surface intérieure du manchon (10) et dans un second sens d'enroulement opposé au premier,
- un deuxième dispositif de convoyage comprenant une vis sans fin (28) dont l'axe est perpendiculaire à l'arbre de la vis sans fin (2) du premier dispositif (1), et qui comprend un enroulage hélicoïdal de spires dont l'une au moins est apte à abraser de la matière compressée (30),
- des moyens de décharge (24) qui peuvent être connectés à un deuxième réservoir (26) et qui sont mis en relation avec le deuxième dispositif (28, 29).

2. Système selon la revendication 1 dans lequel le manchon (10) comprend une pluralité de contrevis (12).

3. Système selon l'une des revendications 1 à 2 dans lequel le pas de la vis sans fin (2) du premier dispositif (1) est constant.

4. Système selon l'une des revendications 1 à 3 dans lequel chaque contrevis (12) a un pas constant.

5. Système selon l'une des revendications 1 à 4 dans lequel chaque contrevis (12) a un pas au moins égal à cinq fois le pas de la vis sans fin.

6. Système selon l'une des revendications précédentes dans lequel la direction des spires (14) de l'enroulement hélicoïdal d'une contrevis (12) au moins fait un angle d'environ 90° avec la direction des spires (8) de l'enroulement hélicoïdal (6) de la vis.

7. Système selon l'une des revendications 1 à 6 comprenant un deuxième réservoir (26) sous pression connecté aux moyens de décharge (24).

8. Système selon l'une des revendications 1 à 7 dans lequel la vis sans fin (28) du deuxième dispositif comprend un manchon (29) dans lequel elle peut tourner.

9. Système selon l'une des revendications 7 à 8 dans lequel le deuxième dispositif (28, 29) est similaire au premier dispositif (10).

10. Système selon la revendication 8 ou 9 dans lequel le manchon (29) du deuxième dispositif est scellé de manière hermétique avec le manchon (10) du premier dispositif (1) à l'extrémité (16) de la vis sans fin (2) opposée aux moyens d'introduction (18).

11. Système selon l'une des revendications 8 à 9 comprenant une pluralité de deuxièmes dispositifs.

12. Système selon la revendication 11 dans lequel chaque deuxième dispositif est scellé de manière étanche avec le dispositif qui le précède dans la direction de convoyage selon un angle droit.

13. Procédé de convoyage d'un matériau solide d'un premier réservoir d'alimentation vers un deuxième réservoir de réaction par un système selon l'une des revendications 1 à 12 comprenant la création d'un bouchon (30) de matériau solide comprimé par le premier dispositif (1), l'abrasion du bouchon (30) par le deuxième dispositif de convoyage et le transport du matériau solide vers le deuxième réservoir (26).

14. Procédé selon la revendication 13 comprenant plusieurs formations de bouchons de matière solide et abrasions par des dispositifs de convoyage.

15. Procédé selon l'une des revendications 13 à 14 dans lequel le deuxième réservoir est à une pression supérieure au premier réservoir.

## Claims

1. System for conveying solid from a first tank (22) to a second tank (26) comprising:
- introduction means (18) which can be connected to a first tank (22),
- a first conveying device (1) connected to the introduction means (18), comprising an endless screw (2) constituted by a shaft (4) fitted with a projecting helical winding (6) in a first winding direction, and a sleeve (10) in which the screw (2) is located and is able to rotate, the sleeve (10) comprising at least one counter screw (12) constituted by a projecting helical winding on the inner surface of the sleeve (10) and in a second winding direction opposite to the first winding direction,
- a second conveying device comprising an endless screw (28) the axis of which is perpendicular to the shaft of the endless screw (2) of the first device (1), and which comprises a helical winding of spirals at least one of which is able to abrade compressed matter (30),
- discharge means (24) which can be connected to a second tank (26) and which are put into relation with the second device (28, 29).

2. System according to claim 1 wherein the sleeve (10) comprises a plurality of counter screws (12).

3. System according to one of claims 1 to 2 wherein the pitch of the endless screw (2) of the first device (1) is constant.

4. System according to one of claims 1 to 3 wherein each counter screw (12) has a constant pitch.

5. System according to one of claims 1 to 4 wherein each counter screw (12) has a pitch at least equal to five times the pitch of the endless screw.

6. System according to one of the previous claims wherein the direction of the spirals (14) of the helical winding of at least one counter screw (12) makes an angle of about 90° with the direction of the spirals (8) of the helical winding (6) of the screw.

7. System according to one of claims 1 to 6 comprising a second pressurized tank (26) connected to the discharge means (24).

8. System according to one of claims 1 to 7 wherein the endless screw (28) of the second device comprises a sleeve (29) in which it is able to rotate.

9. System according to one of claims 7 to 8 wherein the second device (28, 29) is similar to the first device (10).

10. System according to claim 8 or 9 wherein the sleeve (29) of the second device is hermetically sealed with the sleeve (10) of the first device (1) at the end (16) of the endless screw (2) opposite to the introduction means (18).

11. System according to one of claims 8 to 9 comprising a plurality of second devices.

12. System according to claim 11 wherein each device is sealed in a leakproof way with the device preceding it in the conveying direction at a right angle.

13. Process for conveying a solid material from a first feed tank to a second reaction tank by a system according to one of claims 1 to 12 comprising the creation of a plug (30) of solid material compressed by the first device (1) and the transporting of the solid material to the second tank (26).

14. Process according to claim 13 comprising several formations of plugs of solid matter and abrasions by conveying devices.

15. Process according to one of claims 13 to 14 wherein the second tank is at a higher pressure than the first tank.

## Patentansprüche

1. System zur Förderung eines festen Stoffs von einem ersten Speicher (22) zu einem zweiten Speicher (26), umfassend:
- Einspeisungseinrichtungen (18), die mit einem ersten Speicher (22) verbunden sein können,
- eine mit den Einspeisungseinrichtungen (18) verbundene erste Fördervorrichtung (1) mit einer Förderschnecke (2), gebildet durch eine Welle (4), versehen mit einer vorstehenden spiralförmigen Wicklung (6) einer ersten Wicklungsrichtung, und ein Förderrohr (10), in dem die Förderschnecke (2) drehbar sitzt, wobei das Förderrohr (10) wenigstens eine Gegenschnecke (12) umfasst, gebildet durch eine von der Innenoberfläche des Förderrohrs (10) vorstehende spiralförmige Wicklung mit einer der ersten Wicklungsrichtung entgegengesetzten zweiten Wicklungsrichtung,
- eine zweite Fördervorrichtung mit einer Förderschnecke (28), deren Achse senkrecht ist zu der Welle der Förderschnecke (2) der ersten Vorrichtung (1) und die eine spiralförmige Wicklung mit Windungen umfasst, von denen wenigstens eine fähig ist, gepresstes Material bzw. gepressten Stoff (30) zu schaben,
- Austrittseinrichtungen (24), die mit einem zweiten Speicher (26) verbunden sein können und mit der zweiten Vorrichtung (28, 29) verbunden sind.

2. System nach Anspruch 1, bei dem das Förderrohr (10) eine Vielzahl Gegenschnecken (12) umfasst.

3. System nach einem der Ansprüche 1 bis 2, bei dem die Steigung der Förderschnecke (2) der ersten Vorrichtung (1) konstant ist.

4. System nach einem der Ansprüche 1 bis 3, bei dem jede Gegenschnecke (12) eine konstante Steigung hat.

5. System nach einem der Ansprüche 1 bis 4, bei dem jede Gegenschnecke (12) eine in Bezug auf die Steigung der Förderschnecke wenigstens fünffache Steigung aufweist.

6. System nach einem der vorangehenden Ansprüche, bei dem die Richtung der Windungen (14) der spiralförmigen Wicklung von wenigstens einer Gegenschnecke (12) mit der Richtung der Windungen (8) der spiralförmigen Wicklung (6) der Förderschnecke einen Winkel von ungefähr 90° bildet.

7. System nach einem der Ansprüche 1 bis 6 mit einem mit den Austrittseinrichtungen (24) verbundenen druckbeaufschlagten zweiten Speicher (26).

8. System nach einem der Ansprüche 1 bis 7, bei dem die Förderschnecke (28) der zweiten Vorrichtung eine Förderrohr (29) umfasst, in dem sie sich drehen kann.

9. System nach einem der Ansprüche 7 bis 8, bei dem die zweite Vorrichtung (28, 29) der ersten Vorrichtung (10) ähnlich ist.

10. System nach Anspruch 8 oder 9, bei dem das Förderrohr (29) der zweiten Vorrichtung an dem den Einspeisungseinrichtungen (18) entgegengesetzten Ende (16) der Förderschnecke (2) mit dem Förderrohr (10) der ersten Vorrichtung (1) auf hermetisch dichte Weise verbunden ist.

11. System nach einem der Ansprüche 8 bis 9 mit einer Vielzahl zweiter Vorrichtungen.

12. System nach Anspruch 11, bei dem jede zweite Vorrichtung mit der ihr in der Förderrichtung vorangehenden Vorrichtung auf hermetisch dichte Weise gemäß einem rechten Winkel verbunden ist.

13. Verfahren zur Förderung eines festen Stoffs von einem ersten Versorgungsspeicher zu einem zweiten Reaktionsspeicher durch ein System nach einem der Ansprüche 1 bis 12, welches die Bildung eines Pfropfens (30) aus festem Stoff, zusammengepresst durch die erste Vorrichtung (1), die Abschabung des Pfropfens (30) durch die zweite Fördervorrichtung und den Transport des festen Stoffs zum zweiten Speicher (26) umfasst.

14. Vorfahren nach Anspruch 13, mehrere Feststoffpfropfenausbildungen und -abschabungen durch Fördervorrichtungen umfassend.

15. Verfahren nach einem der Ansprüche 13 bis 14, bei dem in dem zweiten Speicher ein höherer Druck herrscht als in dem ersten Speicher.
